# EUROPÄISCHE PATENTSCHRIFT

(11) **EP 2 584 283 B1**
(45) Veröffentlichungstag und Bekanntmachung des Hinweises auf die Patenterteilung: **28.02.2018**
(21) Anmeldenummer: 11190770.5
(22) Anmeldetag: 25.11.2011
(51) Int. Cl.: F24J 2/52, F24J 2/54

(54) **Verfahren und Vorrichtung zur Hangsicherung mit zusätzlicher Anordnung von Photovoltaikelementen zur Energiegewinnung**
Process and device for slope stabilisation with additional assembly of photovoltaic modules for generating energy
Procédé et dispositif pour la stabilisation de pentes avec l'ensemble additionnel des modules photovoltaïques pour la production d'énergie

(30) Priorität: 20.10.2011 EP 11185986
(43) Veröffentlichungstag der Anmeldung: 24.04.2013
(73) Patentinhaber: The Small Circle Company UG, 65183 Wiesbaden (DE)
(72) Erfinder: Brewer, Christian, 55116 Mainz (DE); Petersen, Andrew Kevin, Prof.Dr., Faversham, Kent ME137AL (GB)
(74) Vertreter: Kodron, Felix

(56) Entgegenhaltungen:
- DE-A1-102008 011 869
- DE-A1-102010 005 585
- US-A1- 2005 103 378
- US-A1- 2010 139 649
- US-A1- 2010 180 883

## Beschreibung

Die Erfindung betrifft ein Verfahren sowie eine Vorrichtung zur Hangsicherung mit zusätzlicher Anordnung von Photovoltaikelementen zur Energiegewinnung.

Es ist aus dem Stand der Technik bekannt, zur Hangsicherung oder Böschungssicherung im Bereich beispielsweise des Strassenbaus oder der Bahntrassen Hohlstabanker als Bodennägel zu verwenden beispielsweise im Zusammenwirken mit Geotextilien. Diese Befestigungen empfehlen sich insbesondere bei losen oder instablien Böden, wie diese beispielsweise bei Böschungs-Auffüllungen oder lockerem, aufgeworfenem Abraum vorliegen. Die Bodenvernagelung erfolgt hierbei in der Regel mit einem rhombenförmigen Raster, um eine effiziente Verteilung der Bewehrung zu erreichen.

Das Einbringen der verwendeten Erdanker, die häufig als Injektionsanker ausgebildet sind, erfolgt in der Regel durch Bohrsysteme, die beispielsweise auf Raupenfahrwerken aufmontiert sind. Die Länge der verwendeten Injektionsanker kann hierbei bis zu 30 m betragen. Während des Bohrvorgangs kann hierbei bereits Zementmörtel in den Hohlraum des rotierenden Ankers eingepumpt werden, wodurch analog zum Rohrvorschnitt eine Injektion des Hohlstabes erfolgt.

Als Abschluss nach Einbringung des Erdankers wird häufig zur Stabilisierung der verwendeten beispielsweise Geotextilmatten oder Baustahlgewebe eine Ankerplatte auf dem aus dem Erdreich ragenden freien Ende des Erdankers befestigt. Das freie Ende verbleibt hierbei herausragend aus der nun befestigten geneigten Böschung bzw. Hangfläche.

Auf derartige Weise kommt es zur Absicherung und Befestigung von Böschungen und Hangflächen, die in der Regel großflächig angelegt und beispielsweise mit Spritzbeton oder auch mit Begrünungen zusätzlich stabilisiert werden können. Allerdings ist es hierbei nachteilig, dass diese großen stabilisierten Flächen keinerlei Nutzungsmöglichkeit erlauben und somit lediglich in ihrer Funktion als Befestigung oder auch als Lärmschutz dauerhaft angelegt werden.

Hier setzt die Aufgabenstellung der vorliegenden Erfindung an. Die Aufgabenstellung ist es, eine bekannte Hangsicherung bzw. Böschungsbefestigungsmaßnahme mit einer zusätzlichen Funktion der Energiegewinnung zu kombinieren und somit das Anlegen großflächiger Hangbefestigungen durch eine wirtschaftliche Nutzung dieser Hangflächen attraktiver zu machen. Das beschriebene Verfahren zur Befestigung und gleichzeitiger Errichtung einer Energiegewinnungsvorrichtung soll hierbei bei geringem zusätzlichem Aufwand erfolgen.

Gleichzeitig soll dies eine Ausrichtung der Energiegewinnungsmodule auf den verwendeten Erdnägeln ermöglichen. Dies ist auch Aufgabe der entsprechenden Vorrichtung zur Befestigung eines Energiegewinnungsmoduls auf einem freien Ende eines Erdankers, wobei hier auch die sichere und leichte Befestigung des Energiemoduls auf dem freien Ende des Erdankers erreicht werden soll.

Aus dem Stand der Technik ist in diversen Publikationen bekannt, beim Aufbau von Solarkollektoren und deren Trageeinrichtungen zur sicheren Verankerung im Erdboden Erdanker zu verwenden. So offenbart beispielsweise die deutsche Gebrauchsmusterschrift DE 20 2008 003 830 U1 eine derartige Trageeinrichtung für Solarkollektoren bei der eine Vielzahl von Erdankern zur Befestigung der Trageeinrichtung verwendet wird.

Hintergrund hierfür ist unter anderem die flächige Ausrichtung der Solarkollektoren, die insbesondere eine große Angriffsfläche für Windkräfte darstellen. Aus diesem Grund ist es nicht ausreichend, diese Tragekonstruktionen lediglich auf den Erdboden aufzustellen, da das Eigengewicht zur Sicherung gegen die Windkräfte nicht ausreicht.

Eine andere Veröffentlichung ist beispielsweise ein modulares Tragesystem für Solarkollektoren in der Veröffentlichung DE 20 2006 019 031 U1, wo auch eine Vielzahl von Solarkollektoren auf einem Tragesystem angeordnet sind und eine Vielzahl von Erdankern diese Konstruktion auf dem Boden sichert.

Die Gebrauchsmusterschrift DE 20 2010 003 834 offenbart ebenfalls ein Freilandsolarsystem auf einer Ständerkonstruktion, wobei diese Ständerkonstruktion über einen Verankerungskörper im Erdreich befestigt ist.

In der EP 2320156 A2 ist ein Haltemast offenbart, der als Erdanker in den Boden eingeschraubt wird. Es wird hierbei ein schraubenförmiger Anker vorgeschlagen, wobei dessen Einschraubtiefe in etwa das Doppelte der Länge betragen soll, die dieser Haltemast aus dem Erdreich herausragend angeordnet ist.

Auch dies ist lediglich eine Vorrichtung, die die sichere Befestigung eines Solarmoduls auf dem Erdboden sichern soll, allerdings in keiner Weise eine Sicherung des Erdboden selbst gegen Erdbewegungen bewirkt. Insbesondere handelt es sich bei allen in Stand der Technik aufgezeigten Lösungen um Anordnungen, die eine Anordnung der Tragekonstruktionen auf ebener Erde vorsehen und keine Lösungen für eine Anordnung auf Böschungen.

Aus der Offenlegungsschrift DE102010005585 A1 ist eine Vorrichtung zur Befestigung eines Solarpaneels und eine Vorrichtung zur Befestigung einer Windkraftanlage offenbart, bei der ein Erdanker zum Verbinden mit einem Fundament geeignet ist und der rohrförmige Körper mit einer Halterung für ein Solarpaneel ausgestattet ist. Hierbei besteht allerdings kein Bezug zur Hangsicherung noch sind Erdanker verwendet, die hierfür geeignet wären. Insbesondere ist keine Ausrichtung für das Einbringen in Hanglage vorgesehen.

Schließlich ist aus der Offenlegungsschrift US 2005/103378 A1 eine Solarkollektoreinheit bekannt, die über einen Dorn direkt ins Erdreich gesteckt werden kann und über ein Scharnier ermöglicht, eine daran angeordnete Lampe oder einen Kollektor in einer Vielzahl von Winkeln zu positionieren. Dies ermöglicht, die Solarkollektoreinheit so auszurichten, wie dies für eine effektive Nutzung der Sonneneinstrahlung erforderlich ist. Eine Nutzung im Zusammenhang mit einer Hangsicherung ist allerdings hier nicht vorgesehen und durch die offenbarten technischen Mittel nicht möglich.

Die obengenannte Aufgabe wird durch ein Verfahren, eine Vorrichtung und ein Adapterelement gemäß Anspruch 8 bzw. 5 und 1 gelöst. Das erfindungsgemäße Verfahren zur Hangsicherung und zusätzlichen Anordnung von Photovoltaikmodulen sieht vor, Erdnägel zur Hangsicherung wie in der Beschreibung erläutert in den zu sichernden Hangbereich einzubringen, diese über geeignete Sicherungsmaßnahmen, beispielsweise Injizierung von Mörtel im Erdreich zu fixieren, in einem nächsten Schritt ein Adapterelement auf das freie Ende des Erdankers bodennah aufzusetzen, welches einen Verbindungskörper zur Aufnahme eines Solarmoduls aufnimmt bzw. selbst als integralen Bestandteil ein derartiges Verbindungselement aufweist, wobei die Ausrichtung über eine Kugelgelenkverbindung am Adapterelement erfolgt.

Die so als Widerlager verwendeten freien Enden der Erdnägel sind hierbei nicht als Haltemasten in Sinne der Standes der Technik zu sehen, sondern als lediglich aus der Böschung herausragende Erdankerenden geringfügig über dem Erdboden endend angeordnet. Die Ausrichtung der freien Enden der Erdnägel wird hierbei nicht wie im Stand der Technik üblich vertikal sondern tendenziell horizontal bis geneigt erfolgen, wobei eine Ausrichtung in etwa lotrecht auf der Neigung des Hanges als Regelfall vorliegt.

Das erfindungsgemäße Verfahren sieht daher vor, dass eine spezielle Verbindung der Verbindungselemente von Adapterelement und Verbindungsglied sowie des Solarmoduls bzw. des das Solarmoduls tragenden Rahmens vorgesehen ist.

Die erfindungsgemäße Vorrichtung zur Hangsicherung und gleichzeitigen Halterung eines Solarmoduls besteht erfindungsgemäß aus dem Erdanker, der in seiner Konfiguration nicht primär das Tragen des Solarmoduls sondern primär die Sicherung des Hanges bewirken soll. Es handelt sich hierbei demnach um einen Erdanker, der deutlich grösser dimensioniert ist als die für eine sichere Aufnahme eines Solarmoduls erforderlich wäre. Zudem ist es zweckmäßig, einen Erdanker mit Injektion eines Mörtels zu verwenden, um so eine optimale Hangsicherung zu erreichen.

Es zeigen
- Figur 1: das erfindungsgemäße Adapterelement zur Anordnung eines Photovoltaik-Moduls in geschnittener Darstellung,
- Figur 2: das Adapterelement zur Aufnahme des PV-Moduls mit um 90 Grad gedrehter Kugelhülse 8 im Schnitt,
- Figur 3: eine Frontalansicht der Kugelgelenkverbindung in Position 0 Grad,
- Figur 4: eine Frontalansicht der Kugelgelenkverbindung in Position 90 Grad,
- Figur 5: eine perspektivische Gesamtansicht der Anordnung des Photovoltaikmoduls 13 auf einem Erdanker 1 unter Verwendung des Adapterelements,
- Figur 6: eine perspektivische Frontalansicht des x-förmigen Halterahmens 10 des Photovoltaikmoduls 13 und
- Figur 7: eine perspektivische Rückansicht des Halterahmens 10 des Photovoltaikmoduls 13.

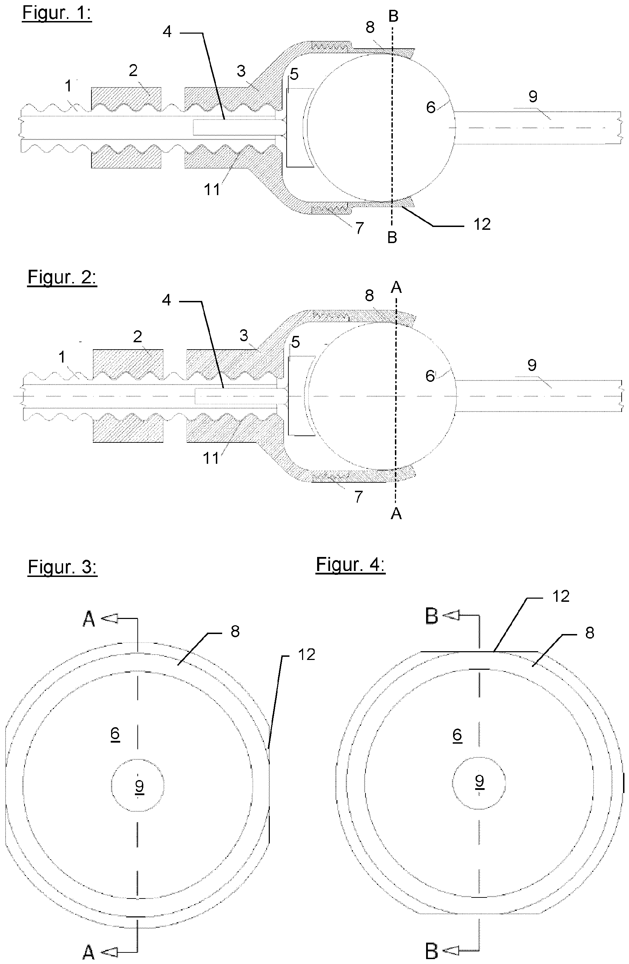

Die Figuren 1 - 4 stellen das Adapterelement zur Anordnung eines Photovoltaikmoduls 13 am freien Ende eines Erdankers 1 dar. In Figur 1 und 2 ist dieses Adapterelement in der Bauform als Kugelgelenkverbindung in zwei geschnittenen Perspektiven darstellt, nämlich in einer um 90 Grad gewendeten Ansicht. Die Figuren zeigen hierbei den Erdanker 1 bzw. das freie Erdankerende, welches aus dem Erdreich herausragend als Angriffspunkt für die Kugelgelenkverbindung dient.

Auf diesen Erdanker 1 aufgesetzt ist als erstes Bauelement eine Kontermutter 2, die als Anlagefläche für die Adapterhülse 3 des Adapterelementes dient und somit deren Aufschraubtiefe auf den Erdanker 1 beschränkt. Die Verbindung zwischen Kontermutter 2, Adapterhülse (3) und Erdanker 1 ist hierbei über Innengewinde in Kontermutter und Adapterhülse 3 sowie dem Rundgewinde am Außenmantel des Erdankers 1 gegeben.

Es ist hierbei erkennbar, dass der Erdanker 1 als Hohlkörper ausgebildet ist, wodurch dieser den Haltevorsatz 4 eines Befestigungsstempels 5 aufnehmen kann, der in der Adapterhülse angeordnet ist und in der dargestellten Bauform eine gerundete Verbindungsfläche angepasst am Radius des Kugelkörpers 6 zu dieser aufweist.

Mittels eines Feingewindes 7 ist auf der Adaüpterhülse (3) vorderseitig eine weitere Hülse aufgeschraubt, nämlich die Kugelhülse 8, die einen Kugelkörpers 6 an der Adapterhülse (3) fixiert. Dieser Kugelkörpers 6 liegt somit mit seiner Außenfläche an dem Stempel 5 an und wird durch das Aufschrauben der Kugelhülse 8 an diesen Stempel 5 angedrückt, wodurch der Kugelkörper 6 in der Adapterhülse (3) durch die Kugelhülse 8 fixiert werden kann. Das heißt, bei nicht ganz aufgeschraubter Kugelhülse 8 auf der Adapterhülse (3) ist der Kugelkörper 6 in der Kugelhülse 8 noch frei beweglich, wird dann aber die Kugelhülse 8 weiter auf der Adapterhülse (3) aufgeschraubt, kommt es zu einem Andrücken der Kugelhülse 8 und somit zu einer kraftschlüssigen Befestigung des Kugelkörpers 6 in ihrer Position in der Kugelhülse 8.

Hierfür ist die Zusammenschau der Figuren 1 und 2 hilfreich, da erkennbar ist, dass die Kugelhülse 8 eine außenflächige seitliche Abflachung 12 aufweist, wie diese auch in den Figuren 3 und 4 in der Frontansicht erkennbar ist. Dies dient dem Angriff eines Werkzeugs zum Aufdrehen der Kugelhülse 8 auf die Adapterhülse (3) und somit zur Fixierung des Kugelkörpers 6 in der Kugelhülse 8.

Von dem Kugelkörper 6 ausgehend und mit diesem verbunden ist ein Verbindungsdorn 9, der aus der Kugelhülse 8 herausragend stabförmig angeordnet ist. Dieser in etwa stabförmige Verbindungsdorn 9 dient als Verbindungskörper zum Photovoltaikmodul 13 bzw. zum Rahmensystem 10 zur Aufnahme des Photovoltaikmoduls 13. Die Ausrichtung dieses Verbindungsdorns 9 dient somit der Ausrichtung des Photovoltaikmoduls 13 selbst, weshalb diese Ausrichtung des Verbindungsdorns 9 über die zuvor beschriebene Befestigung des Kugelkörpers 6 durch ein Anschrauben der Kugelhülse 8 erreicht wird.

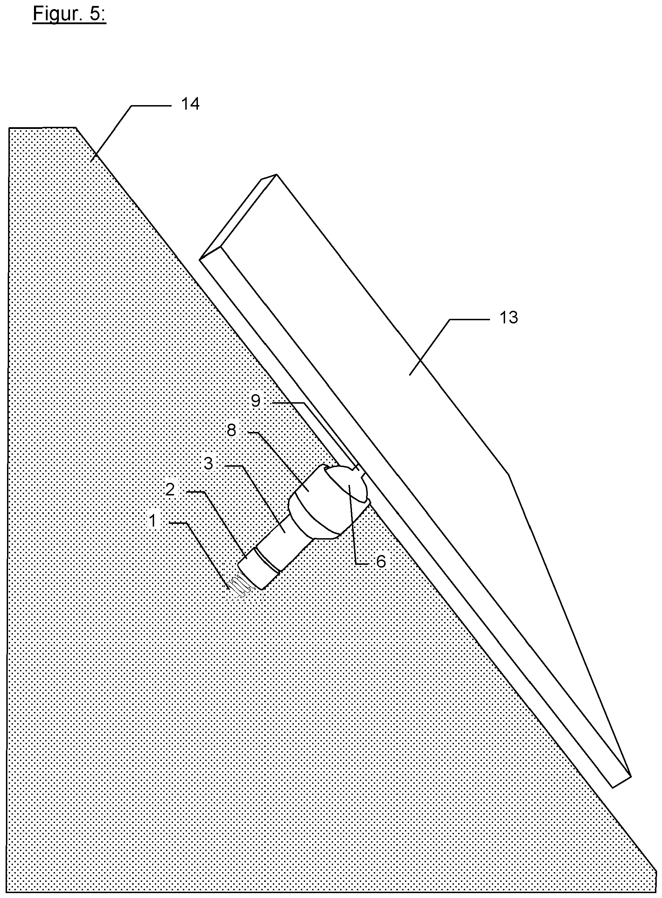

Figur 5 zeigt nun schematisch die Anordnung des Photovoltaikmoduls 13 auf dem Erdanker 1 mit zwischengeschalteten Adapterelement bzw. Kugelgelenkverbindung. Es ist hierbei erkennbar, dass die Anordnung des Erdankers 1 in einer steilen Hanglage erfolgt, weshalb hier spezielle Erdanker 1 in der beschriebenen Form verwendet werden. Auf dem freien Erdankerende, welches nur geringfügig aus der Böschung bzw. aus dem Hang herausragt ist die Kontermutter 2, die als Anlagefläche für die Adapterhülse 3 des Adapterelementes dient, das wiederum die entsprechende Kugelhülse mit Kugelkörper 6 und Verbindungsdorn 9 trägt. Der Verbindungsdorn 9 greift nun rückseitig in das Photovoltaikmodul 13 ein bzw. in das Rahmensystem 10 zur Aufnahme des Photovoltaikmoduls 13.

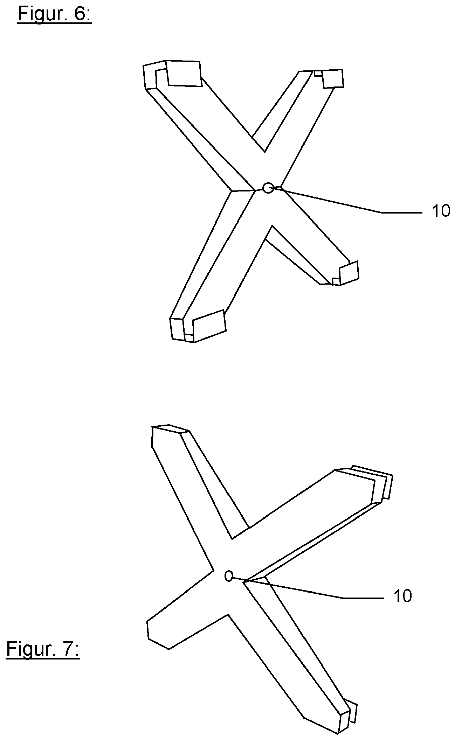

Die Figuren 6 und 7 schließlich zeigen aus Front- und Rückansicht eine mögliche Bauform eines Rahmensystems 10 zur Aufnahme eines Photovoltaikmoduls 13, wie dieses mit der vorliegenden Kugelgelenkverbindung gut kombinierbar wäre. Es ist hierbei eine x-förmige Ausbildung des Rahmensystems 10 vorgesehen, so dass das Photovoltaikmodul 13 zwischen diesen x-förmigen Armen sicher gehalten wird. Es handelt sich somit um eine leichte Bauform, die ohne weiteres auf dem zentralen Verbindungsdorn 9 angeordnet werden kann.

In der Schnittachse der x-förmigen Arme ist ein Dornaufnehmer angeordnet, der in der vorliegenden Bauform als durchgängige Bohrung durch den x-förmigen Rahmen ausgebildet ist. Es ist somit möglich, in einem ersten Schritt das Adapterelement auf das freie Ende des Erdankers 1 zu setzten, den Verbindungsdorn 9 entsprechend der Hangneigung und der gewünschten Neigung des Photovoltaikmoduls 13 auszurichten und nun im nächsten Schritt den x-förmigen Rahmen auf den Verbindungsdorn 9 aufzusetzen und hier mittels geeigneter Befestigungsmittel zu arretieren.

## Patentansprüche

1. Adapterelement zur Anordnung eines Photovoltaikmoduls auf einem Erdanker (1),
mit
einem
- Verbindungsbereich zum Aufsetzen und Fixieren des Adapterelementes auf das freie Ende eines Erdankers (1), **gekennzeichnet durch**
- eine Kugelhülse (8) zum lösbaren Aufsetzen auf eine Adapterhülse (3) des Verbindungsbereichs,
- sowie ein Kugelkörper (6) mit Verbindungselement (9)zu einem Photovoltaikmodul (13), welcher fixierbar auf der Adapterhülse (3) durch die Kugelhülse (8) gehalten angeordnet ist.

2. Adapterelement zur Anordnung eines Photovoltaikmoduls auf einem Erdanker (1) nach Anspruch 1,
**dadurch gekennzeichnet, dass**
das Adapterelement eine Adapterhülse (3) mit Innengewinde (11) aufweist, mittels derer es auf ein Außengewinde am freien Ende des Erdankers (1) aufgeschraubt wird.

3. Adapterelement zur Anordnung eines Photovoltaikmoduls auf einem Erdanker (1) nach Anspruch 1 oder 2,
**dadurch gekennzeichnet, dass**
der Kugelkörper (6) als Verbindungselement einen Verbindungsdorn (9) aufweist, der in eine entsprechende Aufnahme am Photovoltaikmodul (13) oder an einem Rahmensystem (10) für ein Photovoltaikmodul (13) eingreift.

4. Adapterelement zur Anordnung eines Photovoltaikmoduls auf einem Erdanker (1) nach einem der vorherigen Ansprüche,
**dadurch gekennzeichnet, dass**
- die Kugelhülse (8) mittels eines Gewindes (7) auf ein entsprechendes Gewinde des Adapterelementes aufschraubbar ist,
- wobei ein in der Kugelhülse (8) liegender Stempelkörper (5) bei einer Heranführung der Kugelhülse (8) an den in der Kugelhülse (8) gelagerte Kugelkörper (6) angedrückt wird und diesen in einer gewünschten Position des Verbindungsdorns (9) fixiert.

5. Vorrichtung zur Hangsicherung sowie zur Aufnahme von Photovoltaikmodulen mit einem Adapterelement nach einem der Ansprüche 1 bis 4,
**dadurch gekennzeichnet, dass**
- die Vorrichtung aus einem Erdanker (1), welcher zur Hangsicherung in das Erdreich eingebracht wird,
- aus dem Adapterelement gemäß einem der Ansprüche 1 bis 4, welches auf das freie aus dem Erdreich ragende Ende des Erdankers (1) abschließend aufgeschraubt wird
- sowie aus den Verbindungsmitteln des Adapterelementes zu einem Photovoltaikmodul (13) oder zu einem Halterahmen (10) für ein Photovoltaikmodul (13), gebildet wird.

6. Vorrichtung zur Hangsicherung nach Anspruch 5,
**dadurch gekennzeichnet, dass**
das Adapterelement eine Kugelgelenkverbindung zum Photovoltaikmodul (13) aufweist, die mittels einer Kugelhülse (8) am Adapterelement angeordnet und fixierbar ist.

7. Vorrichtung zur Hangsicherung nach einem der vorherigen Ansprüche 5 oder 6,
**dadurch gekennzeichnet, dass**
in der Adapterhülse (3) und der Kugelhülse (8) ein Kugelkörper (6) fixierbar geführt ist, der ein Verbindungsdorn (9) zum Photovoltaikmodul (13) bzw. zu einem das Photovoltaikmodul tragenden Rahmen (10) aufweist.

8. Verfahren zur Hangsicherung mit zusätzlicher Anordnung von Photovoltaikelementen zur Energiegewinnung unter Verwendung der Vorrichtung nach einem der Ansprüche 5 bis 7,
umfassend die Verfahrensschritte
a) Einbringung einer Vielzahl von Erdankern (1) in den zu sichernden Fangbereich,
b) Aufsetzen eines Adapterelementes auf das geringfügig aus dem Hang herausragende freie Ende des eingebrachten Erdankers (1),
c) Ausrichten des Verbindungselementes zu einem Photovoltaikmodul (13) am Adapterelement,
d) Aufsetzen und Arretieren des Photovoltaikmoduls (13) auf das Adapterelement auf dem Erdanker (1).

9. Verfahren zur Hangsicherung mit zusätzlicher Anordnung von Photovoltaikelementen nach Anspruch 8,
**dadurch gekennzeichnet, dass**
als Erdanker (1) ein selbstbohrendes Drill-Hohlstab-Ankersystem mit durchgehendem Außengewinde verwendet wird, welches ohne Verrohrung in das Erdreich eingebracht wird.

10. Verfahren zur Hangsicherung mit zusätzlicher Anordnung von Photovoltaikelementen nach Anspruch 8 oder 9,
**dadurch gekennzeichnet, dass**
während des Einbringens des Erdankers (1) direkt Zementmörtel in den Erdanker (1) injiziert wird, welcher sich gleichmäßig im Rohrloch verteilt und somit eine hohe Verbundfestigkeit zwischen Hohlstabanker und den Bodenschichten bewirkt.

## Claims

1. Adapter element for arranging a photovoltaic module on a ground anchor (1),
having
a connecting region for mounting and fixing the adapter element onto the free end of a ground anchor (1), **characterized by**
- a ball sleeve (8) for detachable mounting onto an adapter sleeve (3) of the connecting region,
- and a spherical body (6) with a connecting element (9) to a photovoltaic module (13) which is arranged such that it can be fixed on the adapter sleeve (3) in a manner held by the ball sleeve (8).

2. Adapter element for arranging a photovoltaic module on a ground anchor (1) according to Claim 1,
**characterized in that**
the adapter element has an adapter sleeve (3) with an internal thread (11) by means of which it is screwed onto an external thread at the free end of the ground anchor (1).

3. Adapter element for arranging a photovoltaic module on a ground anchor (1) according to Claim 1 or 2,
**characterized in that**
the spherical body (6) has, as connecting element, a connecting mandrel (9) which engages into a corresponding receptacle on the photovoltaic module (13) or on a frame system (10) for a photovoltaic module (13).

4. Adapter element for arranging a photovoltaic module on a ground anchor (1) according to one of the preceding claims,
**characterized in that**
- the ball sleeve (8) can be screwed onto a corresponding thread of the adapter element by means of a thread (7),
- wherein a stamp body (5), which is situated in the ball sleeve (8), is, when it is led up to the ball sleeve (8), pressed against the spherical body (6), which is mounted in the ball sleeve (8), and fixes the said spherical body in a desired position of the connecting mandrel (9).

5. Apparatus for slope stabilization and for receiving photovoltaic modules with an adapter element according to one of Claims 1 to 4,
**characterized in that**
the apparatus is formed
- from a ground anchor (1) which is inserted into the ground for slope stabilization,
- from the adapter element according to one of Claims 1 to 4 which is lastly screwed onto the free end of the ground anchor (1), which free end protrudes out of the ground,
- and also from the connecting means of the adapter element to a photovoltaic module (13) or to a holding frame (10) for a photovoltaic module (13).

6. Apparatus for slope stabilization according to Claim 5,
**characterized in that**
the adapter element has a ball-and-socket joint connection to the photovoltaic module (13), which ball-and-socket joint connection is arranged on and can be fixed to the adapter element by means of a ball sleeve (8).

7. Apparatus for slope stabilization according to either of the preceding Claims 5 and 6,
**characterized in that**
a spherical body (6) is guided in a fixable manner in the adapter sleeve (3) and the ball sleeve (8) and has a connecting mandrel (9) to the photovoltaic module (13) or to a frame (10) which carries the photovoltaic module.

8. Method for slope stabilization with an additional arrangement of photovoltaic elements for obtaining energy using the apparatus according to one of Claims 5 to 7,
comprising the method steps of
a) inserting a large number of ground anchors (1) into the slope region to be stabilized,
b) mounting an adapter element onto the free end of the inserted ground anchor (1), which free end protrudes slightly out of the slope,
c) orienting the connecting element to a photovoltaic module (13) to the adapter element,
d) mounting and locking the photovoltaic module (13) onto the adapter element on the ground anchor (1).

9. Method for slope stabilization with an additional arrangement of photovoltaic elements according to Claim 8,
**characterized in that**
the ground anchor (1) used is a self-tapping drill/hollow bar/anchor system with a continuous external thread which is inserted into the ground without piping.

10. Method for slope stabilization with an additional arrangement of photovoltaic modules according to either of Claims 8 and 9,
**characterized in that**,
as the ground anchor (1) is inserted, cement mortar is directly injected into the ground anchor (1) and uniformly distributed in the pipe hole and therefore creates a high bond strength between the hollow bar anchor and the layers of earth.

## Revendications

1. Elément d'adaptateur pour l'agencement d'un module photovoltaïque sur un ancrage enterré (1), avec une zone d'assemblage pour la pose et la fixation de l'élément d'adaptateur sur l'extrémité libre d'un ancrage enterré (1), **caractérisé par**
- une douille à bille (8) pour la pose démontable sur une douille d'adaptateur (3) de la zone d'assemblage,
- ainsi qu'un corps de bille (6) avec un élément d'assemblage (9) à un module photovoltaïque (13), qui est disposé de façon fixable sur la douille d'adaptateur (3) en étant maintenu par la douille à bille (8).

2. Elément d'adaptateur pour l'agencement d'un module photovoltaïque sur un ancrage enterré (1) selon la revendication 1, **caractérisé en ce que** l'élément d'adaptateur présente une douille d'adaptateur (3) avec un filet intérieur (11), au moyen de laquelle il est vissé sur un filet extérieur sur l'extrémité libre de l'ancrage enterré (1).

3. Elément d'adaptateur pour l'agencement d'un module photovoltaïque sur un ancrage enterré (1) selon la revendication 1 ou 2, **caractérisé en ce que** le corps de bille (6) présente comme élément d'assemblage un tourillon d'assemblage (9), qui s'engage dans un logement correspondant sur le module photovoltaïque (13) ou sur un système de cadre (10) pour un module photovoltaïque (13).

4. Elément d'adaptateur pour l'agencement d'un module photovoltaïque sur un ancrage enterré (1) selon l'une quelconque des revendications précédentes, **caractérisé en ce que**
- la douille à bille (8) peut être vissée au moyen d'un filet (7) sur un filet correspondant de l'élément d'adaptateur,
- dans lequel un corps de poinçon (5) situé dans la douille à bille (8) est pressé sur le corps de bille (6) monté dans la douille à bille (8) lors d'une approche de la douille à bille (8) et fixe celui-ci dans une position désirée du tourillon d'assemblage (9).

5. Dispositif pour la stabilisation de pentes ainsi que pour la réception de modules photovoltaïques avec un élément d'adaptateur selon l'une quelconque des revendications 1 à 4, **caractérisé en ce que** le dispositif est formé par
- un ancrage enterré (1), qui est enfoncé dans le sol pour la stabilisation de pentes,
- l'élément d'adaptateur selon l'une quelconque des revendications 1 à 4, qui est finalement vissé sur l'extrémité libre de l'ancrage enterré (1) qui sort du sol, ainsi que
- les moyens d'assemblage de l'élément d'adaptateur à un module photovoltaïque (13) ou à un cadre de support (10) pour un module photovoltaïque (13).

6. Dispositif pour la stabilisation de pentes selon la revendication 5, **caractérisé en ce que** l'élément d'adaptateur présente un assemblage par une articulation à bille au module photovoltaïque (13), qui est disposé et qui peut être fixé à l'élément d'adaptateur au moyen d'une douille à bille (8).

7. Dispositif pour la stabilisation de pentes selon une des revendications précédentes 5 ou 6, **caractérisé en ce qu'**un corps de bille (6) est guidé de façon fixable dans la douille d'adaptateur (3) et dans la douille à bille (8), et présente un tourillon d'assemblage (9) au module photovoltaïque (13) ou à un cadre (10) portant le module photovoltaïque.

8. Procédé pour la stabilisation de pentes avec l'ensemble additionnel d'éléments photovoltaïques pour la production d'énergie en utilisant le dispositif selon une des revendications 5 à 7, comprenant les étapes de procédé suivantes:
a) enfoncement d'une multiplicité d'ancrages enterrés (1) dans la zone de la pente à fixer,
b) pose d'un élément d'adaptateur sur l'extrémité libre de l'ancrage enterré enfoncé (1) sortant légèrement de la pente,
c) alignement de l'élément d'assemblage à un module photovoltaïque (13) sur l'élément d'adaptateur,
d) pose et blocage du module photovoltaïque (13) sur l'élément d'adaptateur sur l'ancrage enterré (1).

9. Procédé pour la stabilisation de pentes avec l'ensemble additionnel d'éléments photovoltaïques selon la revendication 8, **caractérisé en ce que** l'on utilise comme ancrage enterré (1) un système d'ancrage à barre creuse de forage auto-forante avec un filet extérieur continu, qui est enfoncé dans le sol sans tubage.

10. Procédé pour la stabilisation de pentes avec l'ensemble additionnel d'éléments photovoltaïques selon la revendication 8 ou 9, **caractérisé en ce que** l'on injecte directement dans l'ancrage enterré (1) pendant l'enfoncement de l'ancrage enterré (1) du ciment de mortier qui se répartit uniformément dans le trou du tube, et qui assure ainsi une haute stabilité de liaison entre l'ancrage à barre creuse et les couches du sol.
